(19)

Europäisches
Patentamt
European
Patent Office
Office européen
des brevets

(11) **EP 2 466 263 A1**

(12) **EUROPEAN PATENT APPLICATION**

(43) Date of publication:
**20.06.2012 Bulletin 2012/25**

(51) Int Cl.:
**G01C 22/00** (2006.01)

(21) Application number: **11193602.7**

(22) Date of filing: **14.12.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **17.12.2010 US 972139**

(71) Applicant: **NXP B.V.
5656 AG Eindhoven (NL)**

(72) Inventors:
• **Kolbe, Nils
Redhill, Surrey RH1 1DL (GB)**
• **Prochaska, Marcus
Redhill, Surrey RH1 1DL (GB)**

(74) Representative: **Hardingham, Christopher Mark
NXP Semiconductors
Intellectual Property and Licensing
Red Central
60 High Street
Redhill
Surrey RH1 1NY (GB)**

(54) **Tamper-proof odometer system**

(57) Various embodiments relate to a system and related method of validating a distance based on a plurality of sensor measurements in a vehicle. A tamper-proof odometer system may comprise an odometer and a tamper-proof sensor that independently determine distances based on measurements of vehicle components. The tamper-proof sensor may maintain a non-modifiable count based on the angular rotation of a target wheel from which to calculate a vehicle's distance travelled. An odometer may maintain a count based on the rotation of a wheel mounted to the transmission. An electronic control unit (ECU) or dashboard control unit (DCU) may compare the distance derived from the odometer with the distance derived from the tamper-proof sensor by comparing the error to a defined threshold. When the error value is above the defined threshold, this may indicate that one or more of the components of the odometer system have been manipulated.

FIG. 1

EP 2 466 263 A1

**Description**

**TECHNICAL FIELD**

Various exemplary embodiments disclosed herein relate generally to electronic vehicle controls.

**BACKGROUND**

Magnetic sensors, such as Anisotropic Magnetoresistance (AMR) sensors, Giant Magnetoresistance (GMR) sensors, and Hall-Effect sensors play an important role for contactless sensing in various vehicles, such as measurements in subsystems of motor vehicles. For example, AMR sensors may be regularly used for various applications in the vehicle's power-train by, for example, measuring the magnetic fields of various components and making determinations such as the throttle position, based on such measurements. During regular operation, the AMR sensor may compile data based on its measurements of a magnetic field and may send such data to an electrical control unit (ECU) within the vehicle. The ECU may then respond to the received data from the sensor by modifying one or more components within the vehicle, such as when an engine control module (ECM) changes the configuration of a device in the power-train. Such modifications by the ECU may be used by the vehicle to, for example, increase the vehicle's fuel efficiency, acceleration, or power output.

In modern vehicles, however, it is possible for users to tamper with and manipulate vehicle components, such as the ECU. For example, users controlling tampered ECUs may manipulate the odometer and the metric it measures. Even though various techniques have been employed to avert such manipulation, access to the ECU itself makes such protection measures superfluous. As a user can reprogram the ECU itself, a user may therefore modify the odometer value after tampering with the ECU.

**SUMMARY**

Provided are embodiments that provide a tamper-proof odometer system for a vehicle. In particular, various embodiments enable a tamper-proof magnetic wheel sensor that provides data to an electrical control unit. A brief summary of various exemplary embodiments is presented. Some simplifications and omissions may be made in the following summary, which is intended to highlight and introduce some aspects of the various exemplary embodiments, but not to limit the scope of the invention. Detailed descriptions of a preferred exemplary embodiment adequate to allow those of ordinary skill in the art to make and use the inventive concepts will follow in the later sections.

Various embodiments may relate to a method comprising determining, by a tamper-proof wheel sensor, a first measured distance, determining when a target wheel's angular rotation ($\Delta\theta_t$) reaches 360°, incrementing a measured count in a counter in the tamper-proof wheel sensor in response to the incrementing step and determining the first measured distance based on the measured count of the counter. The method may also comprise determining, by a transmission odometer, a second measured distance and producing an error value equal to the difference between the first measured distance and the second measured distance.

Various embodiments may also relate to a system comprising a tamper-proof wheel sensor comprising a sensor processor that determines when a target wheel's angular rotation ($\Delta\theta_t$) reaches 360°. The system may also comprise a counter that increments a measured count in response to the processor determining that the target wheel's angular rotation reached 360°, wherein the processor determines a first measured distance based on the measured count. The system may also comprise a transmission odometer that determines a second measured distance and a dashboard control unit (DCU) that produces an error value equal to the difference between the first measured distance and the second measured distance.

Herein is disclosed a system comprising a tamper-proof sensor comprising a processor that determines when a first target wheel's angular rotation ($\Delta\theta_t$) reaches a threshold; a counter that increments a measured count in response to the processor determining that the first target wheel's angular rotation reached the threshold, wherein the processor determines a first measured distance based on the measured count; an odometer that determines a second measured distance; and a dashboard control unit (DCU) that produces an error value based on a difference between the first measured distance and the second measured distance.

The threshold may be a total angular rotation ($\Delta\theta_t$) of at least 360°.

The system may further comprise a second tamper-proof sensor that determines when a second target wheel's angular rotation reaches at least 360°, increments a second measured count, and determines a third measured distance based on the second measured count.

The DCU may further produce a tamper-proof average distance value $D\theta_{avg}$ equal to an average of the first measured distance and the third measured distance.

The DCU may produce an error value equal to a difference between the tamper-proof average distance value and the mileage memory.

The digital processing unit may include a measured wheel speed value in the secure, unidirectional packet.

It should be apparent that, in this manner, various exemplary embodiments enable a tamper-proof odometer system for a vehicle. Particularly, by providing a tamper-proof magnetic wheel sensor, a user is unable to modify its corresponding odometer value even when the vehicle has a tampered electrical control unit.

## BRIEF DESCRIPTION OF THE DRAWINGS

In order to better understand various exemplary embodiments, reference is made to the accompanying drawings wherein:

FIG. 1 illustrates an example tamper-proof odometer system;
FIG. 2 illustrates an example tamper-proof wheel sensor; and
FIG. 3 illustrates an example flowchart for determining the validity of the odometer.

## DETAILED DESCRIPTION

Referring now to the drawings, in which like numerals refer to like components or steps, there are disclosed broad aspects of various exemplary embodiments.

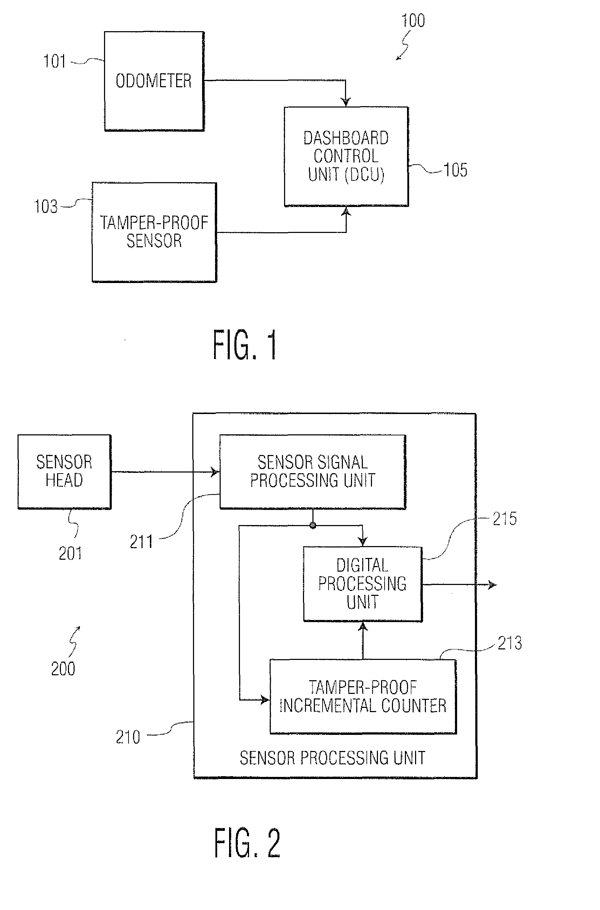

FIG. 1 illustrates an example tamper-proof odometer system. In the illustrative embodiment, the tamper-proof odometer system 100 comprises an odometer 101, a tamper-proof sensor 103, and a Dashboard Control Unit (DCU) 105. In some embodiments, the tamper-proof odometer system 100 may be a sub-unit of a larger vehicle system, such as a vehicle's transmission. Tamper-proof odometer system 100 may be employed by a vehicle in order to determine whether a measurement of the vehicle's mileage has been tampered with and modified. In some embodiments, such a determination may be inaccessible to regular users of the vehicle and may only be accessed under specific conditions, such as authorized operators during diagnostic testing.

In some embodiments, the DCU 105 may calculate a first mileage based on the measurements of the tamper-proof sensor 103. DCU 105 may similarly calculate a second mileage based on the measurements of the odometer 101. When the difference between the two mileages is above a defined threshold quantity, this may indicate that the second mileage based on the odometer 101 has been modified. In some instances, this may be the result of a tampered odometer 101. In alternative embodiments, a user may have used a tampered component, such as a reprogrammed electrical control unit (ECU) via an onboard diagnose (OBD) interface to modify the second mileage.

Odometer 101 may comprise a mechanical, electronic, or electromechanical device that indicates distance travelled by a vehicle. In some embodiments, the odometer 101 may be a mechanical odometer 101 comprising a gear train with a defined gear ratio. In such instances, the input shaft of the odometer 101 will spin the defined number of times before the odometer 101 outputs a counted measurement. For example, the odometer 101 may have a 1690:1 ratio, with the input shaft spinning 1690 times before the odometer outputs a count of 1 mile. In some embodiments, the odometer 101 may include a flexible cable that engages an output shaft (not shown) of the vehicle's transmission. The flexible cable may be connected to the input shaft so that when the output shaft of the transmission rotates, the flexible cable causes the input shaft of the odometer 101 to rotate. The output shaft of the odometer 101 may be connected to a read-out counter that displays the distance measured by the odometer 101 as a mileage quantity. However, in such embodiments where the odometer 101 is a mechanical odometer, the mileage quantity of the odometer 101 may be susceptible to manipulation through direct techniques such as rewinding, which may be due to a reversible gear train.

In other embodiments, the odometer 101 may be an electronic or electromechanical odometer. In such instances, the odometer 101 may comprise a magnetic sensor that tracks a toothed wheel mounted to the output of the vehicle's transmission. Odometer 101 may, for example, count the pulses as each tooth in the toothed wheel passes by the magnetic sensor. Similarly, some embodiments may have the odometer 101 include an optical sensor that tracks a slotted wheel. When the odometer counts the pulses associated with the toothed or slotted wheel mounted to the transmission, there may be a similar ratio between the rotation of the transmission, the count of pulses measured by the odometer, and the mileage calculated for the vehicle. In such instances, the odometer 101 may transmit the number of pulses counted to an electrical control unit (ECU) or dashboard control unit (DCU) 105 that may record the pulse count in memory. DCU 105 may then convert the number of pulses to a mileage quantity based on the defined ratio. However, manipulation of the ECU or DCU 105, especially the memory storing the number of pulses, may result in a manipulated mileage quantity. Such manipulation may comprise a reprogramming of the memory device storing the pulse count; other manipulation may also include modification of packets that include the pulse count.

Tamper-proof sensor 103 may be a sensor in the vehicle that records a non-modifiable measurement related to the distance travelled by the vehicle. For example, in some embodiments, the tamper-proof sensor 103 may comprise a magnetic sensor that may act as a wheel speed sensor used for ABS brake system by tracking the rotation of a toothed or magnetically encoded target wheel mounted to the vehicle's wheels. In such instances, the tamper-proof sensor may use the magnetic sensor to track a magnetic pickup located on the vehicle's wheel. Each time the wheel rotates, the pickup may pass the magnetic sensor, which may generate a voltage in the pickup. Tamper-proof sensor 103 may count each of these pulses in the voltage and may store the pulse count in a memory device, such as, for example, an edge counter. In some embodiments, the tamper-proof sensor 103 may not send the stored pulse count to another device until the vehicle is connected to an authorized device, such as when the vehicle is connected to a diagnostic machine. This may limit the opportunity to manipulate the counter in the tamper-proof sensor 103 or the pulse count that the tamper-proof sensor 103 transmits to other components. In other embodiments, the pulse count of the tamper-proof sensor 103 may be transmitted to the ECU or DCU 105, where it may serve, for example, as a back-up or reference pulse count from which to determine the mileage quantity.

Dashboard control unit (DCU) 105 may an embedded system within the vehicle that controls the displays of the vehicle's dashboard. In some embodiments, the DCU 105 may further comprise an electrical control unit (ECU) that controls other electrical subsystems of the vehicle, such as an engine control module controlling components of the vehicle's power-train and transmission. In such instances, the DCU 105 may receive transmissions directly from the odometer 101 and the tamper-proof sensor 103. In alternate embodiments, the DCU 105 may receive transmissions from the odometer 101 and the tamper-proof sensor 103 through a separate, intermediate ECU (not shown). In some embodiments, the DCU 105 may receive the pulse counts from the odometer 101 and the tamper-proof sensor 103 and may determine distances from the odometer 101 and sensor pulse counts. In alternate embodiments, the DCU 105 may receive determined distances directly from the odometer 101 and/or tamper-proof sensor 103. In such instances, the odometer 101 and/or tamper-proof sensor 103 may further comprise a processor to determine the distance based on the pulse count. In some embodiments, the DCU 105 may include a memory that stores the calculated odometer distance and the calculated tamper-proof sensor distance.

In some embodiments, the DCU 105 may compare the calculated odometer distance and the calculated tamper-proof sensor distance. In some embodiments, the calculated distances may be similar but not identical. This may be due, for example, to the odometer measuring the average of the distances travelled by all the wheels of the vehicle, while the wheel sensor may only measure the distance travelled by one wheel. Wheels may traverse different distances due movements in a curve (e.g., significantly more right turns than left turns) and slippage when travelling at certain speeds. As a result, the DCU 105 may check for tampering of the calculated odometer distance by first calculating an error value and comparing the error value to a defined error threshold. The error value may be equal to the difference between the calculated odometer distance and the calculated tamper-proof sensor distance.

DCU 105 may compare the error value to an error threshold, which may account for common-usage differences between the tamper-proof sensor value and the odometer, while indicating whether the difference is likely due to tampering. For example, the error threshold may be set to a defined percentage of the average between the two calculated values. Thus, an acceptable calculated odometer value may satisfy the equation:

$$\left[\frac{D_\theta + D_O}{2}\right] \cdot \varepsilon \geq |D_\theta - D_O| = \frac{2-\varepsilon}{2+\varepsilon} D_\theta \leq D_O \leq \frac{2+\varepsilon}{2-\varepsilon} D_\theta$$

Where $\varepsilon$ is defined as an error threshold percentage. For example, if $\varepsilon$ is set to 10% of the average and the calculated tamper-proof sensor distance is determined to be 100,000 km, an acceptable calculated odometer distance may be between 90,476 and 110,526 km. The error threshold as defined above is merely illustrative; a person of ordinary skill in the art would be aware of similar ways to define the error threshold to find indications of tampering while accounting for regular-use errors. For example, the error threshold may be a defined percentage of the calculated tamper-proof error distance (using the exemplary quantities above, an acceptable calculated odometer distance would be between 90,000 and 110,000 km).

FIG. 2 illustrates an example tamper-proof wheel sensor. Tamper-proof wheel sensor 200 may comprise a sensor head 201 and a sensor processing unit 210. Sensor processing unit 210 may comprise a sensor signal processing unit 211, a tamper-proof incremental counter 213, and a digital processing unit 215. Tamper-proof wheel sensor 200 may be a wheel speed sensor such as an anisotropic magnetoresistive (AMR), giant magnetoresistive (GMR) or Hall-Effect rotational speed sensor that tracks the rotation of a target wheel in a vehicle. In some embodiments, the sensor head 201 may, for example, record the magnetic field of the target wheel, with the sensor signal processing unit 211 using the measurements of the sensor head 101 to increment the tamper-proof incremental counter 213. Digital processing unit 215 may then transmit the counter value to an ECU or DCU 105.

Sensor head 201 may be a device that measures changes of a target device. For example, the sensor head 201 may be a magnetic sensor that may measure the direction or strength of a magnetic field. In some embodiments, the sensor head 201 may transmit its measurements in the form of a series of pulses corresponding to its measurements. For example, when the sensor head 201 is a magnetic sensor, the sensor head 201 may transmit a pulse to the sensor processing unit 210 whenever it measures a significant change in the magnetic field. This may occur, for example, when tooth and gaps of a toothed target wheel passes by the sensor head 201. In some embodiments, the sensor head 201 may be electrically connected to the sensor signal processing unit 211 in the sensor processing unit 210 and may send a measurement voltage for the sensor signal processing unit 211 to process and interpret.

Sensor processing unit 210 may comprise a processor and other sub-components in the tamper-proof sensor 200 that may receive measurements from the sensor head 201 and may maintain a measured count based on such measurements. In some embodiments, the sensor processing unit 210 may also calculate a distance based on the measurements. For example, in some embodiments, the sensor signal processing unit 211 may receive measurements from the sensor head 201 as a series of pulses in a measurement voltage. Sensor signal processing unit 211 may calculate a wheel angle based on the series of pulses and may also determine a calculated tamper-proof sensor distance based on the calculated wheel angle. In some embodiments, the sensor processing unit 210 may also comprise a programmable prescalar to adapt the tamper-proof incremental counter 213 to the co-domain of the odometer 101 in order to avoid extremely large integer values (for example, a calculated 100,000 km distance may be the result of 6.366 x $10^7$ pulses when each pulse is equivalent to a single rotation of a 0.50 m diameter target wheel).

Sensor signal processing unit 211 may be a state machine, a processor, a reduced-instruction set computing (RISC) processor, or microprocessor that may receive a series of pulses from the sensor head and may increment the tamper-proof incremental counter 213 based on such pulses. In some embodiments, the sensor signal processing unit 211 may also determine the angular rotation of the target wheel by determining the angle value.

For example, if the target wheel has two evenly-spaced pickups around the circumference of the target wheel, each pulse may the equivalent to an angular rotation ($\Delta\theta_t$) of 180°. In some embodiments, the sensor signal processing unit 211 may also produce a calculated tamper-proof sensor distance based on the pulses and/or the angular rotation. Continuing the example, if the diameter of the target wheel is known (e.g. 0.50 m), then each pulse may be equivalent to a specific distance. As such, the sensor signal processing unit 211 may calculate the distance based directly on the number of pulses counted or based on the calculated angular rotation. In some embodiments, the sensor signal processing unit 211 may also produce wheel speed information. For example, the sensor signal processing unit 211 may determine the measured pulse rate by counting the number of pulses over a defined period and calculating the distance travelled. In some embodiments, the sensor signal processing unit 211 may transmit one or more values for the digital processing unit 215 to transmit to the ECU or DCU 105.

Tamper-proof incremental counter 213 may comprise a memory device that maintains a count based on receiving an incremental signal from the sensor signal processing unit 211. In some embodiments, the tamper-proof incremental counter 213 may be a hardware counter such as an edge-triggered counter that increments based on sensing an edge in an input signal. In such instances, the sensor signal processing unit 211 may transmit a signal as a pulse-triggered square wave to the tamper-proof incremental counter 213, with the counter 213 incrementing its count at every rising edge. In some embodiments, the tamper-proof incremental counter 213 may be non-modifiable and non-reprogrammable. In such instances, the tamper-proof incremental counter 213 may not be reset and may act as a reference distance for the vehicle.

In some embodiments, the tamper-proof incremental counter 213 may transmit its count to the digital processing unit 215 for transmission to the ECU or DCU 105.

Digital processing unit 215 may be a processor or sub-component that may receive the count from the tamper-proof incremental counter 213 and/or speed information from the sensor signal processing unit 211 and may produce a packet to send the received information to the ECU or DCU 105. Digital processing unit 215 may place the received information in a payload of a packet, sending the packet to the ECU or DCU 105 using a communications protocol such as SAE J2716, PS15, VDA, et al. In some embodiments, the digital processing unit 215 may comprise an encryption processor that may use an encryption key and applicable encryption algorithm to secure the packet before sending the packet to the ECU or DCU 105.

In some embodiments, access to the count maintained by the tamper-proof incremental counter 215 may be limited to authorized users and/or devices. For example, the sensor processing unit 210 may only use the digital processing unit 215 to send the count maintained by the tamper-proof incremental counter 213 and/or the calculated tamper-proof sensor distance to the ECU or DCU 105 when the ECU or DCU 105 is connected to an authorized diagnostic device. Thus, manipulation of the calculated odometer distance may also require a complete replacement of the tamper-proof wheel sensor 200, which may be significantly more difficult than manipulation of a modifiable counter.

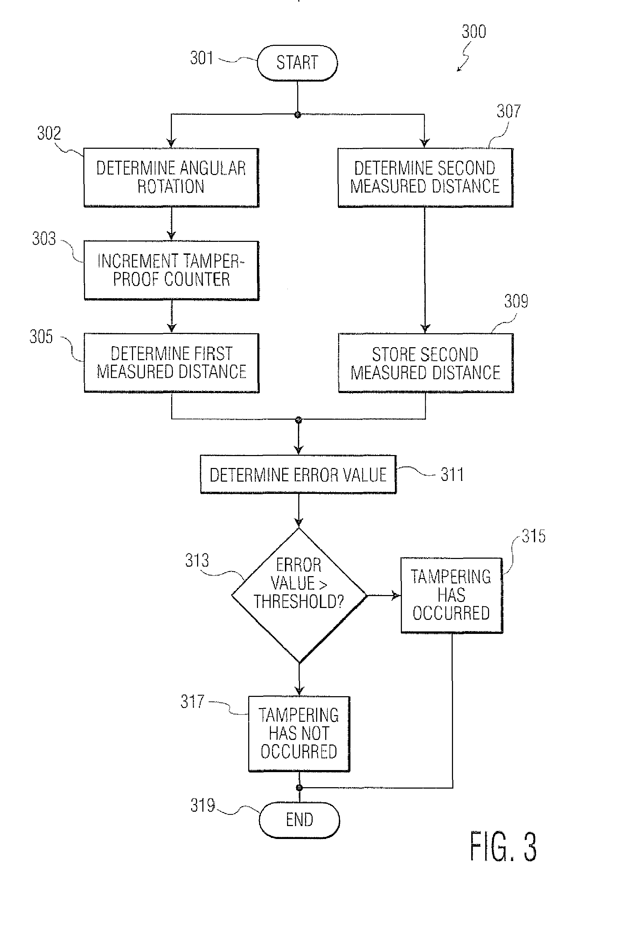

FIG. 3 illustrates an example flowchart for determining the validity of the odometer. Method 300 may be employed by the tamper-proof odometer system 100 when determining the validity of the calculated odometer distance and determining whether one or more components of the odometer system 100 has been tampered with or manipulated. In some embodiments, method 300 may only be run when connected to an authorized device such as a specific diagnostic tool or may be initiated only by an authorized user such as a manufacturer or maintenance technician. In some embodiments, the method 300 may be implemented to determine whether the actual distance is within a defined threshold. In some embodiments, the method 300 may be implemented to determine whether a change in distance is within a defined threshold (e.g., $\Delta D_o$).

Method 300 begins at step 301 and may, in some embodiments, proceed to step 302, where an angular rotation is determined. Tamper-proof wheel sensor 200 may, for example, use the sensor head 201 and the sensor signal processing unit 211 in the sensor processing unit 210 to determine an angular rotation ($\Delta\theta_t$) of a target wheel. Sensor signal processing unit 211 may also in step 303 increment the tamper-proof incremental counter 213.

In step 305, the first measured distance may be determined. In some embodiments, the first measured distance may be the calculated tamper-proof sensor distance and may be based on the determined angular rotation and/or the count of the tamper-proof incremental counter 213. In some embodiments, such as when the tamper-proof odometer system 100 comprises a plurality of tamper-proof sensors 103, the first measured distance may comprise an average of a plurality of calculated tamper-proof distances. In some embodiments, the sensor signal processing unit 211 of the tamper-proof wheel sensor 200 may determine the first measured distance. In alternate embodiments, the DCU 105 may determine the first measured distance based on one or more counts received from the tamper-proof sensor(s) 103.

Method 300 may in some embodiments start at step 301 and proceed to step 307, where a second measured distance is determined. In some embodiments, steps 307-309 may be conducted at the same time as steps 302-305 take place. In some embodiments, the odometer 101 may determine the second measured distance from a count based on the rotation of a wheel mounted to the transmission. In alternate embodiments, the ECU or DCU 105 may receive the count from the odometer 101 and may determine the second measured distance based on the received count. In some embodiments, the second measured distance may comprise the calculated odometer distance. DCU 105 may then proceed to step 309, where the second measured distance is stored. In some embodiments, the second measured distance may be stored in a memory device in the DCU 105.

DCU 105 may determine the error value in step 311 based on the difference between the first and second measured distances. In some embodiments, the first and second measured distances may be stored on a memory device in the DCU 105. In some embodiments, the error value may be equal to the absolute value of the difference between the first measured distance and the second measured difference stored in the memory of the DCU 105.

DCU 105 may then proceed to step 313 where it compares the error value to a defined threshold. In some embodiments, the defined threshold may be based on a percentage of the first measured distance (e.g., the calculated tamper-proof distance) and/or second measured distance (e.g., the calculated odometer distance). For example, the defined threshold may be equal to 5% of the first measured distance. DCU 105 in step 313 may compare the error value to the threshold to determine whether the error value is outside of the range defined by the defined threshold.

When the DCU 105 determines that the error value is greater than the defined threshold, the DCU 105 may proceed to step 315, where it is determined that tampering or manipulation of at least one of the odometer components has occurred. For example, if the defined threshold is 1,000 km, an error value of 5,000 km may indicate that the ECU of DCU 105 has been reprogrammed, or that a user has tampered with the count maintained by the odometer 101. Conversely, when the DCU 105 determines in step 313 that the error value is below the defined threshold, the DCU 105 may proceed to step 317, where it is determined that tampering of components in the odometer system has not occurred. Returning to the illustrative embodiment, when the defined threshold is 1,000 km, an error value of 200 km may indicate that the error between the two calculated distances is within the acceptable operating range of the vehicle. After the tampering determination is made in either step 315 or 317, method 300 may end at step 319.

It should be apparent from the foregoing description that various exemplary embodiments of the invention may be implemented in hardware and/or firmware. Furthermore, various exemplary embodiments may be implemented as instructions stored on a machine-readable storage medium, which may be read and executed by at least one processor to perform the operations described in detail herein. A machine-readable storage medium may include any mechanism for storing information in a form readable by a machine, such as a personal or laptop computer, a server, or other computing device. Thus, a machine-readable storage medium may include read-only memory (ROM), random-access memory (RAM), magnetic disk storage media, optical storage media, flash-memory devices, and similar storage media.

It should be appreciated by those skilled in the art that any block diagrams herein represent conceptual views of illustrative circuitry embodying the principals of the invention. Similarly, it will be appreciated that any flow charts, flow diagrams, state transition diagrams, pseudo code, and the like represent various processes which may be substantially represented in machine readable media and so executed by a computer or processor, whether or not such computer or processor is explicitly shown.

Although the various exemplary embodiments have been described in detail with particular reference to certain exemplary aspects thereof, it should be understood that the invention is capable of other embodiments and its details are capable of modifications in various obvious respects. As is readily apparent to those skilled in the art, variations and modifications can be affected while remaining within the spirit and scope of the invention. Accordingly, the foregoing disclosure, description, and figures are for illustrative purposes only and do not in any way limit the invention, which is defined only by the claims.

**Claims**

1. A method comprising:

   determining, by a tamper-proof sensor, when a target wheel's angular rotation ($\Delta\theta_t$) reaches a threshold;
   incrementing a measured count in a counter in the tamper-proof sensor in response to the rotation-determining step; and
   determining a first measured distance based on the measured count of the counter;
   determining, by an odometer, a second measured distance; and
   producing an error value based on a difference between the first measured distance and the second measured distance.

2. The method of claim 1, further comprising:

   sending, by the tamper-proof sensor, the first measured distance to a dashboard control unit (DCU);
   sending, by the odometer, the second measured distance to the DCU; and
   storing, in a memory device, a mileage memory based on the second measured distance, wherein the error value is equal to a difference between the first measured distance and the mileage memory.

3. The method of claim 2, further comprising:

   comparing the error value with a tolerance threshold; and
   determining that the mileage memory was subject to tampering when the error value is above the tolerance threshold.

4. The method of claim 1, wherein the tamper-proof sensor is one of: an anisotropic magneoresistive (AMR) sensor, a giant magnetoresistive (GMR) sensor, and a Hall-effect sensor.

5. The method of claim 2, wherein the tamper-proof sensor sends the first measured distance in a secure, unidirectional packet.

6. The method of claim 1, wherein the odometer is included within a gearbox of a transmission system.

7. The method of claim 1, wherein the threshold is a total angular rotation ($\Delta\theta_t$) of at least 360°.

8. The method of claim 2, further comprising:

   receiving, by the DCU, a third measured distance produced by a second tamper-proof sensor.

9. The method of claim 8, wherein the error value equals a difference between the mileage memory and an average of the first measured distance and the third measured distance.

10. The method of claim 5, further comprising:

    including, by a digital processing unit, a measured wheel speed value into the secure, unidirectional packet.

11. A system comprising:

    a tamper-proof sensor comprising:

       a processor that determines when a first target wheel's angular rotation ($\Delta\theta_t$) reaches a threshold;
       a counter that increments a measured count in response to the processor determining that the first target wheel's angular rotation reached the threshold, wherein the processor determines a first measured distance based on the measured count;

    an odometer that determines a second measured distance; and
    a dashboard control unit (DCU) that produces an error value based on a difference between the first measured distance and the second measured distance.

**12.** The system of claim 11, wherein the DCU further comprises:

a memory device that stores a mileage memory based on the second measured distance, wherein the DCU:

produces an error value based on a difference between the first measured distance and the mileage memory, compares the error value with a tolerance threshold, and
determines that the mileage memory was subject to tampering when the error value is above the tolerance threshold.

**13.** The system of claim 11, wherein the tamper-proof sensor is one of: an anisotropic magneoresistive (AMR) sensor, a giant magnetoresistive (GMR) sensor, and a Hall-effect sensor.

**14.** The system of claim 13, wherein the tamper-proof sensor further comprises:

a sensor head that detects rotation of the first target wheel and produces a magnetic input signal; and
an application-specific integrated circuit (ASIC) processor containing the processor and the counter, the ASIC processor further comprising a digital processing unit that produces a secure, unidirectional packet including the first measured distance, wherein the ASIC processor converts the magnetic input signal into an electrical pulse when the first target wheel's total angular rotation reaches the threshold, wherein the threshold is at least 360°.

**15.** The system of claim 11, wherein the odometer is included within a gearbox.

101 — ODOMETER

100

DASHBOARD
CONTROL
UNIT (DCU) — 105

103 — TAMPER-PROOF
SENSOR

FIG. 1

SENSOR
HEAD

201

SENSOR SIGNAL
PROCESSING UNIT

211

DIGITAL
PROCESSING
UNIT — 215

200

TAMPER-PROOF
INCREMENTAL COUNTER — 213

210

SENSOR PROCESSING UNIT

FIG. 2

FIG. 3

Europäisches
Patentamt

European
Patent Office

Office européen
des brevets

**EUROPEAN SEARCH REPORT**

Application Number

EP 11 19 3602

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 2 336 911 A (BARTON MARTIN DOUGLAS [GB]) 3 November 1999 (1999-11-03) * page 1 - page 8; figure 1 * ----- | 1-15 | INV. G01C22/00 |
| X | US 2003/088348 A1 (GUSTAVSSON TOMMY [US] ET AL) 8 May 2003 (2003-05-08) * paragraph [0015] - paragraph [0030] * ----- | 1-15 | |
| X | DE 10 2007 059785 A1 (CONTINENTAL AUTOMOTIVE GMBH [DE]) 25 June 2009 (2009-06-25) * paragraph [0019] - paragraph [0028] * ----- | 1-15 | |
| A | EP 0 928 970 A1 (LEGRAND ERIC [FR]; ADOUL MOHAMMED [FR]) 14 July 1999 (1999-07-14) * paragraph [0038] - paragraph [0095] * ----- | 1-15 | |

TECHNICAL FIELDS
SEARCHED       (IPC)

G01C
G01P

The present search report has been drawn up for all claims

| Place of search | Date of completion of the search | Examiner |
|---|---|---|
| The Hague | 21 March 2012 | Neering, Jan Julius |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

         .............................................................
& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 11 19 3602

This annex lists the patent family members relating to the patent documents cited in the above-mentioned European search report.
The members are as contained in the European Patent Office EDP file on
The European Patent Office is in no way liable for these particulars which are merely given for the purpose of information.

21-03-2012

| Patent document cited in search report | | Publication date | Patent family member(s) | | Publication date |
|---|---|---|---|---|---|
| GB 2336911 | A | 03-11-1999 | AU | 3716599 A | 16-11-1999 |
| | | | GB | 2336911 A | 03-11-1999 |
| | | | WO | 9956083 A1 | 04-11-1999 |
| US 2003088348 | A1 | 08-05-2003 | AU | 2002340380 A1 | 19-05-2003 |
| | | | CA | 2465866 A1 | 15-05-2003 |
| | | | EP | 1444669 A2 | 11-08-2004 |
| | | | MX | PA04004250 A | 08-07-2004 |
| | | | US | 2003088348 A1 | 08-05-2003 |
| | | | US | 2004093146 A1 | 13-05-2004 |
| | | | WO | 03041030 A2 | 15-05-2003 |
| DE 102007059785 | A1 | 25-06-2009 | DE | 102007059785 A1 | 25-06-2009 |
| | | | EP | 2223287 A1 | 01-09-2010 |
| | | | WO | 2009074503 A1 | 18-06-2009 |
| EP 0928970 | A1 | 14-07-1999 | EP | 0928970 A1 | 14-07-1999 |
| | | | FR | 2773616 A1 | 16-07-1999 |

EPO FORM P0459

For more details about this annex : see Official Journal of the European Patent Office, No. 12/82